Europäisches Patentamt

European Patent Office

Office européen des brevets

(11) Publication number: **0 224 520**
**B1**

(12) **EUROPEAN PATENT SPECIFICATION**

(45) Date of publication of patent specification: **08.11.89**

(21) Application number: **86903321.7**

(22) Date of filing: **12.05.86**

(86) International application number:
**PCT/EP86/00278**

(87) International publication number:
**WO 86/06936 04.12.86 Gazette 86/26**

(51) Int. Cl.⁴: **A 23 G 9/12, F 25 B 39/02**

(54) **IMPROVEMENTS IN ICE-CREAM MACHINES, PARTICULARLY FOR DOMESTIC USE.**

(30) Priority: **28.05.85 IT 5343485**

(43) Date of publication of application:
**10.06.87 Bulletin 87/24**

(45) Publication of the grant of the patent:
**08.11.89 Bulletin 89/45**

(84) Designated Contracting States:
**AT BE CH DE FR GB IT LI LU NL SE**

(56) References cited:
**EP-A-0 157 061**
**DE-A-2 939 076**
**DE-C- 623 324**
**FR-A-1 183 376**
**FR-A-1 426 377**
**FR-A-2 280 303**
**FR-A-2 528 158**
**FR-A-2 546 038**
**US-A-2 455 872**
**US-A-2 776 549**
**US-A-2 821 845**
**US-A-3 117 621**
**US-A-3 452 555**

(73) Proprietor: **BREVETTI GAGGIA S.p.A.**
**I-20087 Robecco sul Naviglio (IT)**

(72) Inventor: **PANDOLFI, Alberto**
**Via San Giacomo 2**
**I-20142 Milano (IT)**

(74) Representative: **Klausner, Erich et al**
**c/o Ufficio Internazionale Brevetti Ing. C. Gregorj**
**S.p.A. Via Dogana 1**
**I-20123 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to ice-cream machines, particularly for domestic use, of the known type comprising:
— a fixed vessel,
— a container for the product, located within the vessel and removable therefrom,
— means for mixing the product within the container, and
— a cooling circuit including:
an evaporator coil associated with the fixed vessel,
a compressor having its inlet connected to the outlet end of the evaporator coil,
a capillary tube communicating with the inlet end of the evaporator coil,
a duct for communication between the outlet of the compressor and the capillary tube, and
a condenser connected in the duct.

The object of the present invention is to provide an ice-cream machine of the type specified above, which has a simple and cheap construction and is quick and easy to assemble.

The prior art comprises the Patents FR—A—2.546.038, US—A—3452555 and US—A—2821. The Patent FR—A—2546038 relates to an apparatus for producing ice-cream in which the evaporator coil comprises two distinct parts, one formed by a conventional spiral-shaped tube, cooling the lateral wall of the ice cream container and the other one realized by a so-called roll bonding technique, cooling only the bottom of said container. The Patent US—A—3452555 relates to an ice-cream freezer provided with cooling means formed by a conventional spiral-shaped tube which surrounds the walls and the bottom of a fixed ice-cream container.

The Patent US—A—2821845 relates to an evaporator structure for refrigerators and not to an ice-cream machine in which the evaporator coil is made by the roll-bonding technique. The object of the invention is to provide an ice-cream machine in which the evaporator coil is defined between a pair of plates connected together by the known technique of roll-bonding to realize an integral T-shaped evaporator coil which forms and cools both the lateral and bottom walls of the fixed vessel, as appears from the claim.

The invention will now be described with reference to the appended drawings, provided purely by way of example, in which:

Figure 1 is a partially sectioned schematic view of an ice-cream machine according to the invention,

Figure 2 is a view of a detail of Figure 1 on an enlarged scale, and

Figure 3 is a plan view of the development of the wall of the fixed vessel of the ice-cream machine according to the invention.

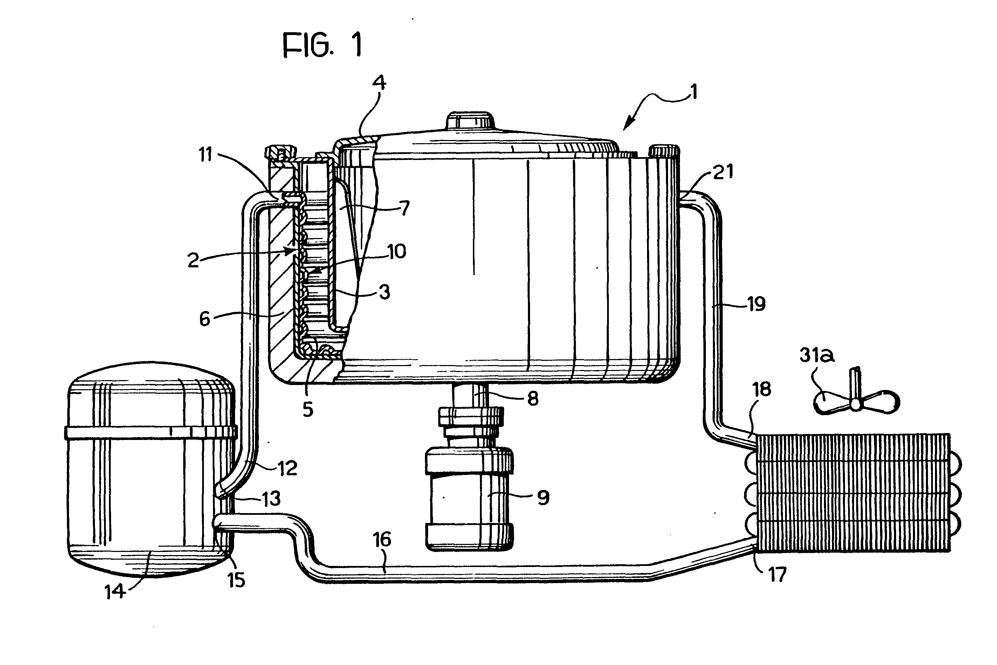

Figure 1 illustrates an ice-cream machine 1 for domestic use, including a fixed vessel 2 and a container 3 for the product to be chilled, disposed within the vessel 2 and removable therefrom. The container 3 has an associated lid 4. In accordance with the prior art, the container 3 is smaller than the vessel 2 whereby an interspace 5 containing a liquid with a low freezing point, for example a saline solution, is defined between their side walls and bottoms.

The fixed vessel 2 is surrounded by a casing 6 of thermally-insulating material. Within the removable container 3, which is intended to receive the product, there is also provided, in known manner, a rotary tool 7 for mixing the product, mounted on a shaft 8 driven by an electric motor 9.

The ice-cream machine 1 has an associated cooling circuit whose components are housed within the housing (not illustrated) of the ice-cream machine. The real position of the various components within the body of the ice-cream machine has not been illustrated in order to allow the components themselves and the connections between them to be shown more clearly.

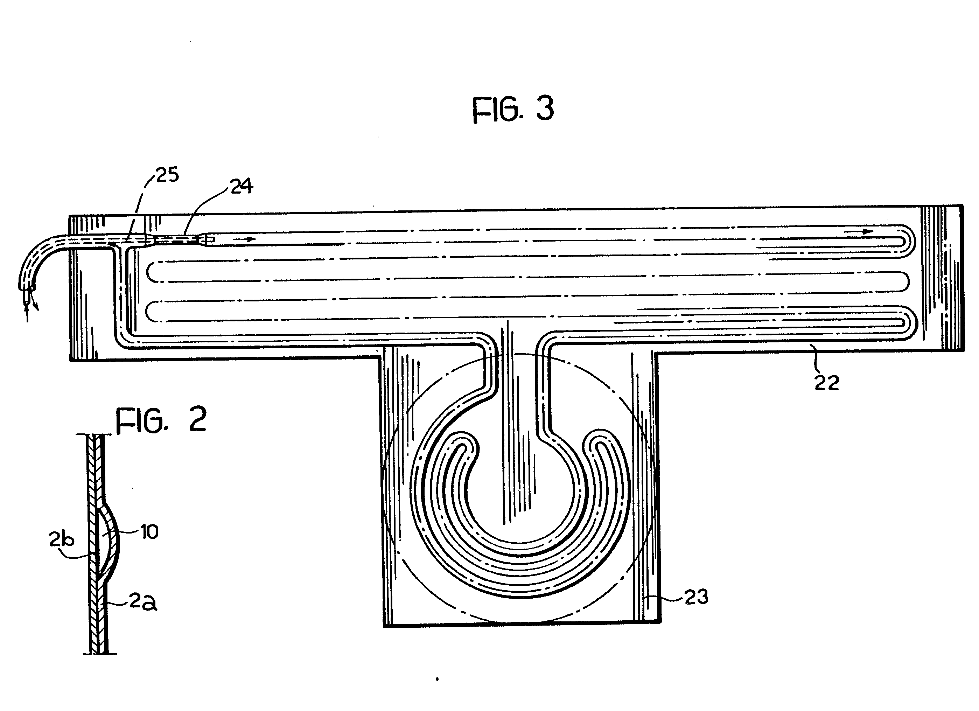

The cooling circuit of the ice-cream machine includes an evaporator coil 10 associated with the fixed vessel 2 and having an outlet end 11 connected through a duct 12 to the inlet 13 of a hermetic compressor 14. The outlet 15 of the hermetic compressor 14 is connected through a duct 16 to the inlet 17 of a condensor 31 whose outlet 18 is connected through a duct 19 to a capillary tube (which will be described with reference to Figure 3) located in correspondence with the inlet 21 of the evaporator coil 10. The condenser 31 is constituted by a radiator having a fan 31a driven by an electric motor (not illustrated).

In the prior art, the evaporator coil 10 is constituted by a tube wound into a helix and housed in the interspace 5.

According to the present invention, however, the evaporator coil is formed in the wall of the fixed vessel 2, which is constituted by a pair of plates 2a, 2b (see Figure 2) connected together by the technique known as "roll bonding".

Figure 3 illustrates the development of the side wall and the bottom of the fixed vessel 2 as they are made by the aforesaid technique. After they have been made in the developed form, the part thereof corresponding to the side wall of the vessel, indicated 22 in Figure 3, is bent at a right angle to the part corresponding to the bottom of the vessel, indicated 23. The part 22 is then formed into a cylinder and its two opposite ends are joined together by welding or seaming to define the fixed vessel.

As illustrated schematically in Figure 3, the serpentine path has a constricted portion 24 in which the capillary tube 25 of the cooling circuit is intended to be housed. In Figure 3 the direction of flow of the fluid through the evaporator is indicated by the arrows.

## Claim

Ice cream machine, particularly for domestic use, comprising:
— a fixed vessel (2),

—a container (3) for the product, located within the vessel (2) and removable therefrom,

—means (7) for mixing the product within the container (3), and

—a cooling circuit including:

an evaporator coil (10) associated with the fixed vessel (2),

a compressor (14) having its inlet (13) connected to the outlet end (11) of the evaporator coil (10),

a capillary tube (25) communicating with the inlet end (21) of the evaporator coil (10), a duct (16, 19) for communication between the outlet (15) of the compressor (14) and the capillary tube (25), and

a condenser (31) connected in the duct (16, 19), characterized in that the passage of the evaporator coil (10) is defined between a pair of plates (2a, 2b) connected together by the known technique of "roll bonding" which realize an integral T-shaped evaporator coil, which forms and cools both the side wall (22) and the bottom (23) of the vessel (2), by forming the horizontal part (22) of the T-shaped cooling circuit into a cylindrical shape, by bending the remaining part at a right angle to form the bottom (23) and by joining together the two end edges of the cylindrical part by welding or seaming to define the fixed vessel.

**Patentanspruch**

Speiseeismaschine, insbesondere für Hausgebrauch, welche ein feststehendes Gefäß (2), einen Behälter (3) für die Masse, der im Gefäß (2) angeordnet und aus diesem herausnehmbar ist, Mittel (7) zum Mischen der Masse im Behälter (3) und einen Kühlkreislauf aufweist, der eine Verdampferschlange (10), welche mit dem feststehenden Gefäß (2) verbunden ist, einen Kompressor (14) dessen Einlaß (13) mit dem Auslaßende (11) der Verdampferschlange (10) verbunden ist, ein Kapillarrohr (25) welches mit dem Einlaßende (21) der Verdampferschlange (10) in Verbindung steht, eine Verbindungsleitung (16, 19) zur Verbindung zwischen dem Auslaß (15) des Kompressors (14) und dem Kapillarrohr (25), und einen Kondensator (31) der in die Verbindungsleitung (16, 19) eingefügt ist, enthält, dadurch gekennzeichnet, daß der Durchgang der Verdampferschlange (10) zwischen einem Paar von Platten (2a, 2b) gebildet ist, welche miteinander durch die als "roll-bonding" bekannte Technik verbunden sind und welche eine integrierte T-förmige Verdampferschlange bilden, welche sowohl die Seitenwand (22) als auch den Boden (23) des Gefäßes (2) bildet und kühlt, indem der horizontal verlaufende Teile des T-förmigen Kühlkreises zu einer zylindrischen Form geformt ist, der übrige Teil im rechten Winkel abgebogen ist, um den Boden (23) zu bilden, und die beiden Endränder des zylindrischen Teiles durch Schweißen oder Falzen miteinander zusammengefügt sind, um das feststehende Gefäß zu definieren.

**Revendication**

Machine à fabriquer de la crème glacée, en particulier à usage domestique, comprenant:

—une capacité fixe (2);

—un récipient (3) pour le produit, placé dans la capacité (2) et pouvant être retiré de celle-ci;

—un dispositif (7) pour mélanger le produit dans le récipient (3), et

—un circuit de refroidissement comprenant:

un serpentin évaporateur (10) associé à la capacité fixe (2);

un compresseur (14) dont l'entrée (13) est raccordée à l'extrémité de sortie (11) du serpentin évaporateur (10);

un tube capillaire (25) communiquant avec l'extrémité d'entrée (21) du serpentin évaporateur (10);

un conduit (16, 19) pour établir une communication entre la sortie (15) du compresseur (14) et le tube capillaire (25), et

un condenseur (31) branché dans le conduit (16, 19),

caractérisée en ce qu'on ménage le passage du serpentin évaporateur (10) entre deux plaques (2a, 2b) reliées l'une à l'autre par la technique connue de "fixation par laminage" qui réalisent un serpentin évaporateur en T d'une seule pièce, qui forme et refroidit à la fois la paroi latérale (22) et le fond (23) de la capacité (2), en conférant à la partie horizontale (22) du circuit de refroidissement en T une forme cylindrique, en pliant la partie restante à angle droit pour former le fond (23) et en réunissant les deux bords d'extrémité de la partie cylindrique par soudage ou agrafage pour définir la capacité fixe.

FIG. 1

EP 0 224 520 B1

FIG. 3

FIG. 2

EP 0 224 520 B1